(19) Europäisches Patentamt
European Patent Office
Office européen des brevets

(11) EP 4 687 356 A1

(12) EUROPEAN PATENT APPLICATION

(43) Date of publication:
**04.02.2026 Bulletin 2026/06**

(21) Application number: **24192674.0**

(22) Date of filing: **02.08.2024**

(51) International Patent Classification (IPC):
***H04S 7/00*** *(2006.01)* ***H04R 29/00*** *(2006.01)*
***G06F 30/23*** *(2020.01)* *H04R 1/40* *(2006.01)*
*H04R 27/00* *(2006.01)*

(52) Cooperative Patent Classification (CPC):
**H04R 29/008; G06F 30/23; H04R 29/007; H04S 7/40;** H04R 1/403; H04R 27/00; H04R 2201/403

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Funktion One Research Limited**
**Dorking Surrey RH5 4PS (GB)**

(72) Inventor: **Hipperson, James**
**Dorking, RH5 4PS (GB)**

(74) Representative: **Marks & Clerk LLP**
**15 Fetter Lane**
**London EC4A 1BW (GB)**

# (54) METHOD OF GENERATING A SOUND PRESSURE LEVEL MAP FOR LOUDSPEAKER ARRAYS

(57) A method of generating a Sound Pressure Level, SPL, map for a venue. The method comprises receiving a loudspeaker system configuration including loudspeaker unit data. A data library is accessed to obtain a loudspeaker unit type data including a geometry of loudspeaker unit types and acoustic velocity information at surface locations of the loudspeaker unit types. A mesh representation of the loudspeaker system is obtained and used to generate system acoustic velocity information at surface locations of the mesh representation of the loudspeaker system. A numerical method is used to calculate surface pressures at surfaces of the mesh representation of the loudspeaker system, based on said system acoustic velocity information. A far field pressure at a multiplicity of observation points within said venue is then obtained and an SPL map generated based on the obtained far field pressures.

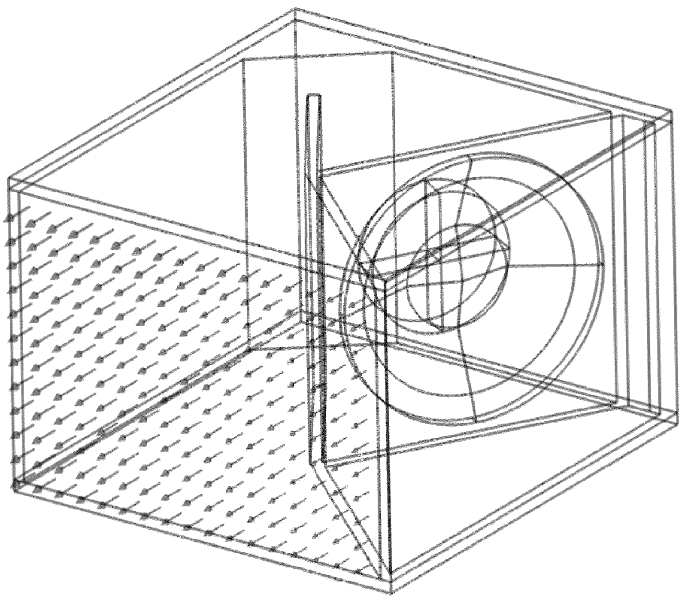

Figure 5

EP 4 687 356 A1

## Description

### Technical Field

The present invention relates to a method of generating a Sound Pressure Level (SPL) map, for example as part of a sound reinforcement system design process.

### Background

Venues such as concert halls, stadia, festival sites, etc, typically use arrays of loudspeakers in order to project sound over a large area. These loudspeaker arrays are typically integrated into a so-called "sound reinforcement system" which additionally includes microphones, signal processors, and amplifiers. The loudspeakers within their cabinets are all controlled by a mixing console and signal processing system to ensure the performance is clearly audible and enjoyable across the entire audience area. The sound reinforcement system may also be used to enhance or alter the sound of the sources on the stage as opposed to simply amplifying the sources. A sound reinforcement system for a large scale concert in a stadium for example may be very complex, including hundreds of audio channels, complex sound mixing and signal processing systems, tens of thousands of watts of amplifier power, and multiple loudspeaker arrays.

It is desirable to design and install a sound reinforcement system so that the sound across the venue area is both uniform and of high quality. Whilst the knowledge and experience of sound engineers is of course critical in these tasks, computing platforms are now available to assist with the design stages. Such platforms may take as input venue geometry and acoustics, and loudspeaker properties, in order to generate or assist in designing a sound reinforcement system which is likely to provide optimum performance.

In sound reinforcement it is desirable and often necessary to predict the sound pressure level (SPL) across an area to optimise deployment of low frequency/bass loudspeakers (subwoofers) before the event takes place. The current standard method to do this is the complex directivity point source model (CDPS). As the name implies, the CDPS model takes complex directivity measurements of a loudspeaker or array of loudspeakers and applies this to an infinitesimally small point source in 3D coordinate space. At each evaluation point in 3D coordinate space, the complex pressure contributions from each "virtual" point source are summed to calculate the resulting SPL.

The CDPS method captures the phase interactions between sources quite accurately and, providing that the simulation fits within the constraints imposed by the measured directivity data, the results usefully approximate reality. However, there are some significant disadvantages to this approach, the principal one being that it does not consider all aspects of wave physics, such as reflection, diffraction, and shadowing/occlusion. This means, for example, that effects resulting from the physical presence of the loudspeaker cabinets, which may be acoustically large, are not accounted for. For CDPS models to be accurate, users must be limited to modelling configurations of loudspeakers that have been directly measured in the real world, significantly limiting design freedom and possibly introducing significant errors for edge cases that do not correspond closely to measurements. At least in the case of a bass loudspeaker, measurements may be practically difficult or impossible as this preferably requires the use of anechoic chambers, most of which are not large enough for measurement of low frequencies below 100Hz. Whilst measurements for bass loudspeakers can be conducted outdoors, this introduces other problems and sources of error.

EP2090137B1 describes a method of automatically optimising an array of full range speaker elements for use in a venue comprising providing an initial candidate configuration for the array and iterating until a stopping criteria is reached.

### Summary

An improved sound reinforcement system design method is presented here that seeks to include aspects of wave physics such as reflection, diffraction, shadowing/occlusion which, until now, have been assumed to be too computationally expensive to run directly on end users' hardware. The inventor has discovered that this assumption is wrong and that current computing hardware is capable of running full wave domain simulations on end user computing machines at low frequencies (20-200Hz), using a numerical method that does not require meshing of domains and requires only a relatively coarse meshing of boundaries, due to the long wavelengths involved. This may reduce the number of elements and degrees of freedom, and therefore the computational size and cost of the model. On modern hardware, the model may produce results in seconds, with even large models (several thousand degrees of freedom) typically computing in less than one minute.

According to a first aspect of the present invention there is provided a computer-implemented method of generating a Sound Pressure Level, SPL, map for a venue in which a loudspeaker system is to be installed. The method comprises:

a) receiving a loudspeaker system configuration including at least a number of loudspeaker units, a type of each of the loudspeaker units, and a physical location of the loudspeaker units within said venue;
b) obtaining, for each loudspeaker unit type, a loudspeaker unit type data set including a geometry of the loudspeaker unit type and acoustic velocity information at surface locations of the loudspeaker unit type;
c) obtaining a mesh representation of the loudspeaker system based on the loudspeaker system configuration;

d) generating, based on at least the loudspeaker system configuration information and the acoustic velocity information, system acoustic velocity information at surface locations of the mesh representation of the loudspeaker system;

e) using a numerical method to calculate surface pressures at surfaces of the mesh representation of the loudspeaker system, based on said system acoustic velocity information;

f) obtaining, based on the calculated surface pressures, a far field pressure at a multiplicity of observation points within said venue; and

g) generating an SPL map based on the obtained far field pressures.

The SPL map may be generated for a specific defined frequency. It may comprises selecting a subset of points from said multiplicity of observation points, repeating steps b) and d) to f) for a plurality of different frequencies to generate a frequency versus far field pressure data set for each of the subset of points.

The method may comprise constructing said data library by performing a computer implemented simulation on one or more loudspeaker unit types to determine acoustic velocity information at surface locations of the or each loudspeaker unit type, and saving results into the data library. The simulation may be conducted using a Lumped Element Model to obtain a lumped element circuit model of a loudspeaker driver and a Finite Element Mesh bidirectionally coupled to the lumped element circuit model, the simulation further comprising applying a Finite Element Method to the Finite Element Mesh and bidirectionally coupled lumped element circuit model.

The data library may be constructed on one or more first computers and distributed to one or more client computers configured to generate a Sound Pressure Level, SPL, map.

The method may comprise constructing said data library by using an acoustic sensor to perform acoustic measurements on a loudspeaker unit of the or each type, and saving results into the data library. The numerical method may be a Boundary Element Method which may apply pre-set crossover filters to calculate surface pressures at surface locations of the mesh representation.

The step of obtaining a far field pressure at a multiplicity of observation points within said location uses a Green's function.

The method may comprise receiving venue information defining the venue including the presence and locations of objects, and one or more observation planes, said multiplicity of observation points being located in the one or more observation planes, and said step of obtaining a far field pressure at a multiplicity of observation points taking into account said venue information.

The method may comprise receiving said loudspeaker system configuration and, optionally, venue information, via a Graphical User Interface of a computer system.

The loudspeaker system configuration may comprise at least one of a gain setting of each loudspeaker unit and a delay setting of each loudspeaker unit.

The system acoustic velocity information at surface locations of the mesh representation of the loudspeaker system may comprise an array of complex numbers.

The loudspeakers units may be bass loudspeaker units or subwoofers.

The method may comprise displaying the SPL map as a visual image on a display of a graphical user interface.

According to a second aspect of the present invention there is provided a computer program comprising instructions which, when the program is executed by a computer system, cause the computer system to carry out the steps of the method of the above first aspect wherein the computer system may optionally comprise an end user computer and a workstation or computer server.

According to a third aspect of the present invention there is provided a computer-readable storage medium comprising instructions which, when executed by a computer system, cause the computer system to carry out the steps of the method of the above first aspect.

According to a fourth aspect of the present invention there is provided a method of setting up a venue and comprising applying the method of the above first aspect to identify a loudspeaker system configuration that generates a desired SPL map across at least a public area of the venue, and installing a loudspeaker system having that configuration into the venue.

## Brief description of the drawings

Figure 1 is a flow diagram of a method according to the present disclosure;

Figure 2 is a schematic overview of a method according to the present disclosure;

Figure 3 is a circuit diagram depicting an equivalent circuit for a lumped element model for a loudspeaker driver;

Figure 4 depicts a fine Finite Element Model mesh for a horn loudspeaker;

Figure 5 is an arrow plot of a simulated normal acoustic velocity for the horn loudspeaker of Figure 4;

Figure 6 depicts a coarse Boundary Element Mesh of the horn loudspeaker of Figure 4;

Figure 7 depicts a Graphical User Interface for a bass array design; and

Figure 8 depicts an assembled array mesh.

## Detailed Description

Sound pressure level (SPL) is related to the acoustic pressure. The acoustic pressure is the absolute value of the generated pressure variations and is measured in units of Pascals, and can be positive or negative relative to atmospheric pressure. However, the highest sound pressure that can be endured by a human ear, known as the pain threshold, is a million times greater than the lowest sound pressure that can be heard by a human ear, which is known as the hearing threshold. To avoid having numbers in such a wide range, the SPL is used, which is 20*log10(Pressure/Reference) with units of dB, where the Pressure is a root mean squared acoustic pressure, and the Reference is a reference sound pressure. The most commonly used reference sound pressure is 20 $\mu$Pa, which is the considered to be the hearing threshold in humans.

When designing a sound reinforcement system for a particular venue it is advantageous for the designer to have access to an SPL map, which may be visualised via a Graphical User Interface (GUI) of a computer, indicating the SPL that is generated in an environment where loudspeakers are present. It is particularly beneficial to be able to simulate the SPL and thereby generate an SPL map for various configurations of loudspeakers and loudspeaker arrays so that the configuration of loudspeakers and loudspeaker arrays can be optimised for the venue.

Provided here is a method for generating such an SPL map for an array of loudspeakers or for a plurality of such arrays. According to at least one embodiment, an array of loudspeakers is an array of bass loudspeakers, such as subwoofers but the method is not limited to bass loudspeakers and can be used for other loudspeaker types. The method utilises existing mathematical tools such as Lumped Element models, meshing, and Finite and Boundary Element Methods (FEM and BEM). The method is performed by a computer, or a plurality of computers. Such computers may be for example desktop or laptop personal computers as well as servers including server clusters and cloud based servers. The method may utilise a software program or a plurality of software programs.

It is beneficial to provide a software program to generate an SPL map that can be used by a user in substantially real time when designing a sound reinforcement system, or at least with only minimal delays. It is preferable that adjusting configuration details of the loudspeakers and/or loudspeaker arrays does not require large amounts of time to regenerate the SPL map. Achieving this involves using a combination of pre-stored and real-time calculations.

Figure 1 is a flow diagram of a method according to the present disclosure. Figure 2 is a schematic overview of the method illustrating various different embodiments. The method will be described according to a first embodiment with reference to Figure 1 and Figure 2.

## First Embodiment

In order to generate an SPL map over a geographical, e.g. 2D or 3D, area, respective acoustic velocity data of the loudspeakers used in the system are obtained. It is known that when a loudspeaker emits sound, changes in the acoustic pressure in and around the loudspeaker occur due to the reflection, diffraction, and/or shadowing/occlusion of emitted sound waves from various components of the loudspeaker. This in turn affects the acoustic velocity of the sound waves emitted from the loudspeaker, i.e. for sound emitted at the same frequency, the acoustic velocity will be lower in areas of higher acoustic pressure, and higher in areas of lower acoustic pressure. The acoustic velocity of the sound emitted also affects the acoustic pressure in and around other loudspeakers of the system, and so an understanding of the acoustic velocity of each loudspeaker, e.g. in one or more loudspeaker arrays, can be used to model the acoustic pressure in the surrounding geographical area. When using a BEM to calculate the acoustic pressure field (as described below), the acoustic velocity on the boundaries is provided as an input.

In order to improve the computational efficiency of the method at an end user's computer, calculations for the acoustic velocities of one or more types of loudspeaker units are stored in a data library accessible to the user, removing the need for these to be calculated on demand when the user is designing a specific sound reinforcement system. NB. For the purpose of this discussion we assume that a loudspeaker unit is a single loudspeaker comprising one or more loudspeaker drivers mounted within a cabinet. However it will be understood that a loudspeaker unit may also comprise other loudspeaker configurations as well as assemblies of loudspeakers, e.g. a small or large array of loudspeakers.

Referring to Figure 1, in step 1, an acoustic velocity field normal to the emitting surface of the loudspeaker unit (normal acoustic velocity) is determined for each of a plurality of loudspeaker unit types to be included in the library. This step is performed *a priori* for each loudspeaker unit type, using for example a high-performance workstation or server, and the results are stored for later use. These results can then be used at a later time by a software program (application) running on an end user's computer. According to this first embodiment, the calculation of the normal acoustic velocity data is performed by simulation. Simulation of acoustic velocity is often easier and more cost effective than direct measurement. In a non-limiting example a loudspeaker manufacturer or supplier may construct a library containing acoustic velocity data for a range of loudspeaker units that they provide.

In an embodiment, the simulation of the normal acoustic velocity data utilises a Lumped Element Model (LEM). The LEM uses a simplified representation of a physical electrical circuit that assumes all components are concentrated at a single point. The LEM is used to model the various circuit components of the loudspeaker driver (i.e. the transducer that converts electrical energy to sound waves). Figure 3 is a circuit diagram depicting an equivalent circuit for a lumped element model for a loudspeaker driver. Optionally, a full electromagnetic-structural Finite Element Model (FEM) simulation can be used to model the driver. This offers advantages when non-linear behaviour must be captured, but may increase computational complexity when it is unnecessary to capture non-linear behaviour.

According to an embodiment, a first step of simulating the normal acoustic velocity data comprises measuring the lumped element driver parameters (Thiele-Small Parameters) of each loudspeaker unit driver. Thiele-Small parameters are a set of electromechanical parameters that define the specified low frequency performance of a loudspeaker driver. The lumped element driver parameters can be an average of production samples, or a "Golden Reference" unit as preferred. [A "Golden Reference" is a single reference unit that is used in comparison with all other production units. Typically, the electromechanical parameters of the single reference unit are measured and then used as a reference for comparison with other units.] The lumped element driver parameters may include, but are not limited to: (i) equivalent piston area of the driver diaphragm; (ii) mass of the driver diaphragm and voice-coil assembly, including acoustic load; (iii) compliance of the driver's suspension; (iv) the mechanical resistance of the driver's suspension; (v) voice coil inductance; (vi) DC resistance of the voice coil; and (vii) the product of magnetic flux density in the voice-coil gap and the length of wire in the magnetic field. In Figure 3, the following parameters are shown: $Z_e$ - generator impedance; $B_l$ - Force factor of motor; $R_{ms}$ - Lumped mechanical resistance (damping); $M_{ms}$ - Lumped moving mass (including air load); $C_{ms}$ - Lumped mechanical compliance; $S_d$ - Effective diaphragm area; and $Z_{rad}$ - Acoustic radiation impedance.

The Lumped Element Model works effectively when applied to bass loudspeakers because it is entirely valid at low frequencies - it is not necessary to simulate all aspects of wave physics in the context of a low frequency loudspeaker driver/transducer because all features of the loudspeaker are acoustically small relative to the wavelengths emitted by the loudspeaker. Similarly, it is assumed that the loudspeaker will only be operated in its linear range, and non-linear behaviour is ignored.

A second step of simulating the normal acoustic velocity data comprises receiving loudspeaker unit parameters. The loudspeaker unit parameters may comprise a geometry of the loudspeaker unit which may be CAD geometry. The geometry is used to generate a fine (high resolution) mesh of the cabinet internals and loudspeaker driver(s). This mesh can be used in the Finite Element Method and so can be referred to as a "Finite Element Mesh". Loudspeaker cabinets and drivers may be meshed using a method such as Delaunay or MeshAdapt.

The lumped element circuit model of the transducer as seen in Figure 3 is bidirectionally coupled to the Finite Element mesh of the loudspeaker diaphragm, cabinet and internal air volume(s) as illustrated in Figure 4. This means that the acoustic velocity of the cone drives the finite element model, and the acoustic pressure/velocity in the finite element model drives the cone and therefore the lumped element circuit model. The model requires this bidirectional coupling to achieve a physically correct result.

Small details are removed for the purpose of the calculation, but acoustically large features such as the driver magnet, large braces etc. are included in the geometry. The mesh size may be 6-10 elements per wavelength at the highest frequency of interest. According to an embodiment, 10 elements per wavelength at 200Hz are used (0.172m), but other numbers of elements may be used at different frequencies, and the present disclosure is not limited to any particular number of elements or any particular frequency.

For example, the number of elements per wavelength may be between 2 and 100, and preferably between 5 and 20. The wavelength may be between 10Hz and 500Hz, and preferably between 100Hz and 300Hz. Of course, the mesh can be made relatively small to improve accuracy of results as, in this preparatory stage, computing resources and not particularly restricted.

In a subsequent step, an acoustic FEM simulation is used to calculate the pressure and velocity in each element as can be seen in Figure 5. The model solves for the complete acoustic field within the loudspeaker cabinet air volume(s) and on the radiating boundary(ies), i.e. the front surface of the loudspeaker. The Finite Element Method is used to compute approximations to the real solutions of partial differential equations (PDEs) that define the acoustic velocity. Approximations of the partial differential equations can be constructed, typically based upon different types of discretizations. These discretization methods approximate the PDEs with numerical model equations, which can be solved using numerical methods.

A function $u$ represents the acoustic velocity across the surface of the loudspeaker horn, which is the dependent variable for a partial differential equation. The function $u$ can be approximated by a function $u_h$ using linear combinations of basis functions according to the following expressions:

$$u \approx u_h$$

and

$$u_h = \sum_i u_i \psi_i$$

Here, $\psi_i$ denotes the basis functions and $u_i$ denotes the coefficients of the functions that approximate $u$ with $u_h$.

In the case of a horn loudspeaker, only the normal component of the acoustic velocity across the mouth of the horn for each frequency of interest is required. This can be averaged across the entire surface or stored as an array with a normal velocity value for each element. In the case of a bass reflex loudspeaker, the normal velocity for each loudspeaker diaphragm and each bass reflex port/vent may be stored separately. Again, this can be averaged over the surface or the values for each element stored in an array. The output of this stage is an array of complex numbers. The normal acoustic velocity for each face may be stored by tagging the values of the acoustic velocity to the surfaces of the loudspeaker unit in a 3D representation of the loudspeaker unit, as shown in Figure 6. For surfaces other than the mouth, elements of the mesh are considered as reflecting (velocity of zero, Neumann boundary condition).

Validation tests indicate that the lumped element-finite element coupled model is accurate to within roughly 1dB in the frequency range of interest (20Hz -200Hz).

The simulation of the acoustic velocity may be performed on software such as COMSOL™ which takes the LEM and loudspeaker geometry / properties as inputs to generate the acoustic velocities as outputs. COMSOL is of course only one example of a software package that can be used for this purpose.

The results of the acoustic velocity data calculations are then stored in a memory. The results can then be accessed by a user using SPL map generating software. The results for each type of loudspeaker unit can be stored as part of a library that can be accessed by a user through the software. NB. The data may be saved locally with the software or may be downloaded on demand from some central storage location. The storing in the library may be performed automatically without any input from the user.

The following steps are performed on a user device assuming that a library of data for one or more loudspeaker unit types is available.

In order to determine an SPL map across a location where a sound reinforcement system is to be deployed, it is important to understand the configuration of a plurality of loudspeaker units. As already noted, reflection, diffraction, and shadowing/occlusion, of the loudspeaker units in the location will affect the acoustic velocity and pressure of the other loudspeaker units in the location. Advantageously, a sound engineer is able to input a desired loudspeaker system configuration into a software application to generate an SPL map for that configuration.

In step 2 (Figure 1), loudspeaker system configuration information for a plurality of loudspeaker units is determined. The loudspeaker configuration information comprises information including at least one of a physical array layout for a plurality of loudspeaker units and/or stacks of loudspeakers units, gain settings for the loudspeaker units, and delay settings for the loudspeakers units. The loudspeaker system configuration information may comprise additional information relating to the configuration of the loudspeaker units such as crossover frequencies, EQ and more.

The loudspeaker system configuration information may be input into the local software application by the sound engineer via a Graphical User Interface (GUI). An example of such a GUI is illustrated in Figure 7. The sound engineer can design a bass array for example, specifying the loudspeaker unit type (e.g. using a drop-down menu to select from a range of available bass units), the number of loudspeakers in a "stack" (column), and number of stacks/columns and their spacing. This enables rapid configuration of the two most common array types, vertical linear arrays and horizontal linear arrays. Also configurable is the gain and delay of the overall array, each stack and each loudspeaker unit. Other array configurations are possible by manual placement or by loading preset array types. Array configurations (including physical settings and electronic settings) can be saved and loaded by the user.

The loudspeaker system configuration information may further comprise additional information relating to the location in which the loudspeaker system is to be deployed. This information can be entered by the sound engineer via the GUI (NB. Previously entered information may be saved with the GUI allowing the sound engineer to select from a list of available venues, e.g. Wembley Arena™, O2™ etc).

The additional information may comprise information indicating the position(s) of an additional objects or planes in the loudspeaker system environment; if the loudspeaker system is to be deployed in an environment comprising a sound desk, the position of the sound desk may be included in the loudspeaker system configuration information. The information indicating the positions of additional objects may relate to solid (reflective) objects and planes. The inclusion of additional information in the loudspeaker system configuration information enables calculation of room modes and accurate prediction for low frequency sound indoors. The additional information may include information as to whether a plane or object is acoustically transparent, reflecting or absorbing. When additional information is included in the loudspeaker system configuration information, additional error handling may be necessary to ensure that a mesh generated according to the method (discussed below) is geometrically correct for use with the Boundary Element Method, e.g. to ensure that there is no intersecting geometry, or no thin gaps or holes.

Optionally, pre-set crossover filters may be received, which are configured to split signals in a given frequency range into two or more smaller frequency ranges across a plurality of loudspeaker units. These may be applied to the configuration of loudspeaker units input by the user via the GUI. Optionally, time alignment values between loudspeaker units and arrays can be set to ensure coherent summation between frequency ranges.

In step 3, a mesh of the provided loudspeaker system is generated based on the loudspeaker system configuration information and the acoustic velocity information retrieved from the pre-stored library. The data included in the loudspeaker configuration information is converted into complex numbers and multiplied (optionally) with the pre-set crossover filters and retrieved acoustic velocity data to produce a large array of complex numbers representing the velocity for each radiating surface in the system. Meshing also takes place in this step. However, rather than perform a new meshing from scratch, based on the physical array parameters specified by the user in the GUI, the meshes for the specified loudspeaker units obtained at step 1 (and saved with the unit data in the library) are copied and aligned to produce a mesh for the entire system. Crucially, intersecting geometry is not permitted, and resulting internal boundaries are removed. Simply "copying and pasting" the single loudspeaker unit meshes is easier and faster than trying to mesh the entire array geometry using a meshing algorithm. An example of a system mesh produced by this method is depicted in Figure 8 where the system comprises a single horizontal array of bass loudspeaker units. Figure 8 illustrates an example of a "broadside array", which is a periodic horizontal array of stacked loudspeakers with spaces between them. The spacing is adjustable by the user to adjust the coverage and performance.

In step 4, a surface pressure calculation of the array or arrays of loudspeaker units is calculated. This is performed using a numerical method that does not require meshing of domains, such as the Boundary Element method (BEM). Alternatively, a Fast Multipole Method (FMM) may be used. FMM may be suitable for relatively large models, e.g. models with high resolution. FMM may be viewed as an extension or an add-on to BEM that accelerates the solution for very large models by exploiting the fact that calculations for distant interactions can be approximate. Nonetheless, for the remainder of this discussion, the method will be described with reference to BEM.

BEM is used to determine the direct acoustic radiation and the scattered acoustic field that has been scattered by obstacles in the way of an incoming acoustic field. This is achieved by solving a problem on the surfaces of the obstacles. In the present disclosure, the obstacles include but are not limited to the other loudspeakers included in the loudspeaker environment. For each point on the obstacle the solutions are summed together to calculate the acoustic field, and thus the acoustic pressure, at that point.

The meshes used in the BEM phase are much coarser than those used in the FEM pre-calculation phase. This is because the relevant time complexity is $O(N^2)$, where N is the number of elements. The number of elements may include the boundaries of the loudspeakers and any other boundaries included in the model (walls, reflecting objects etc.). O is so-called "big O", a mathematical notation that describes the limiting behaviour of a function when the argument tends towards a particular value or infinity. The time taken for the FEM pre-calculation is not a limiting factor given the processing power of the workstation or server and the fact that the calculation is done *a priori,* but the BEM phase must be fast because the user is designing the system substantially on demand.

The maximum element size for the BEM meshes is set to be approximately six elements per wavelength at 100Hz, 0.5m. Validation tests show that this does not significantly compromise the accuracy of the model in the frequency range of interest (below 100Hz). However, other numbers of elements may be used and other frequencies may be used. For example, the number of elements may be between 3 and 9, and the frequency may be within 50Hz and 150Hz. The resolution of the model may be adjusted by the user in the GUI, to balance speed of calculation and accuracy. An example of a mesh of a single loudspeaker unit to be used in the BEM method is depicted in Figure 6.

During the BEM array mesh generation process, the software program keeps track of the surfaces so that radiating surfaces match up with their specified velocity in the velocity array, and non-radiating surfaces are specified to be reflecting and have a velocity of zero (Neumann boundary condition). This includes whether the loudspeaker is facing forwards, or backwards as used in a cardioid (directional) array.

Once a mesh with normal velocity specifications for each surface has been calculated (either radiating or non-radiating, velocity = zero), a system of equations are assembled in matrix form using the Boundary Element Method (BEM). The system of equations is then solved to calculate the pressure on each surface in the mesh using a solver. There are numerous solvers and methods that can be used. According to at least one embodiment, the Generalized Minimal Residual Method (GMRES), which is an iterative solver, is used. Ground reflections may also be included in the calculation. This can be achieved simply by mirroring the array mesh with the ground plane to double it in size, or by using more sophisticated methods within the BEM calculations, such as utilising a symmetric Green's Function.

Once the pressures on the surfaces of the configured loudspeaker system have been calculated, at step 5, the far field pressure can be calculated at any observation point using a Green's function. This may be done in two separate ways:

1) For the SPL maps/colour plots, a grid of observation points is generated based on the plane geometry specified by the user in the GUI. This plane might be a horizontal plane at a defined height, e.g. with the height selected based on a seated or standing venue, a multiple plane geometry in the case of a venue with raked seating at different levels, a vertical plane, etc. The size of the grid is determined by the plane extents defined by the user. The resolution of the grid is defined by the user from, for example, 0.1m to 2m: a higher resolution produces more accurate results but takes longer to calculate whilst a lower resolution can significantly reduce the computation time at the expense of accuracy. The surface pressure calculation may be performed at a fixed resolution or the resolution may be adjustable as described above. The far field pressure is evaluated at each of the observation points in the grid, for each calculation plane in the model.

2) According to a frequency response (FR) view, the model is run in a loop for each frequency of interest, and the observation points are determined by the microphone objects placed by the user in the graphical user interface. The far field pressure is only evaluated at the positions where a user has placed a microphone object. The calculation is repeated for every frequency to produce a frequency response plot for each microphone position.

Next, at step 6, an SPL map is generated. Assuming that both 1) and 2) have been performed, the complex pressure values in Pascals at each observation are converted into sound pressure level (dB SPL) and mapped to a colour, preferably a perceptually linear colour map such as *Viridis* or similar. This is mapped to a texture, which is drawn on a plane in 3D. Optionally this can be achieved with a shader (a small program that runs on a GPU) for speed. The frequency response results are drawn as a graph in a separate window, with options to select which microphone objects to plot.

The SPL map may be displayed on the same GUI used to input the loudspeaker configuration information. The SPL map may use differences in colour to show differences in SPL.

The SPL map may be used by a sound engineer when designing a sound reinforcement system. For example, the engineer may vary the arrangement of loudspeaker units and loudspeaker unit arrays, including numbers, location and orientation, in order achieve a relatively uniform pressure distribution across the venue or at least that region of the venue where the public will be present. A successful result may be indicated by a uniform colour across the audience areas in the venue within the GUI and, possibly, by colours indicating a low SPL in non-public areas, e.g. backstage.

<u>Second Embodiment</u>

According to the second embodiment, the calculation of the normal acoustic velocity (step 1 in Figure 1) is performed by measurement, rather than by (FEM) simulation, for example using an appropriate acoustic velocity sensor. When measuring the normal component of acoustic velocity of the loudspeakers, an acoustic velocity sensor is held at a fixed distance from the radiating surface (horn or loudspeaker diaphragm) and moved across it. This could be by hand using an "acoustic camera" type tracking system or automated in an XY fashion like a CNC machine. The normal component of acoustic velocity is extracted in post-processing and either averaged across the surface or stored as an array of some acoustically reasonable resolution. This step can be seen in the second alternative in Figure 2. The remaining steps (1-6) of the second embodiment are the same as those performed in the first embodiment.

Whilst Figure 2 has not been considered in detail, this illustrates both embodiments discussed above, i.e. loudspeaker unit surface acoustic velocity determination by simulation and by direct measurement.

The embodiments discussed above have proposed the use of a pre-generated data library to provide loudspeaker unit type data sets. However, this is merely presented by way of example and it will be appreciated that, as an alternative, such data sets may be generated on demand and as part of the process of generating the SPL map. This may involve using a Finite Element Method to generate the data sets with these data sets being fed substantially directly into the BEM.

While certain arrangements have been described, they have been presented by way of example only, and are not intended to limit the scope of protection. The inventive concepts described herein may be implemented in a variety of other arrangements. In addition, various additions, omissions, substitutions and changes may be made to the arrangements described herein without departing from the scope of the invention as defined by the following claims.

## Claims

**1.** A computer-implemented method of generating a Sound Pressure Level, SPL, map for a venue in which a loudspeaker system is to be installed, the method comprising:

a) receiving a loudspeaker system configuration including at least a number of loudspeaker units, a type of each of the loudspeaker units, and a physical location of the loudspeaker units within said venue;

b) obtaining, for each loudspeaker unit type, a loudspeaker unit type data set including a geometry of the loudspeaker unit type and acoustic velocity information at surface locations of the loudspeaker unit type;

c) obtaining a mesh representation of the loudspeaker system based on the loudspeaker system configuration;

d) generating, based on at least the loudspeaker system configuration information and the acoustic velocity information, system acoustic velocity information at surface locations of the mesh representation of the loudspeaker system;
e) using a numerical method to calculate surface pressures at surfaces of the mesh representation of the loudspeaker system, based on said system acoustic velocity information;
f) obtaining, based on the calculated surface pressures, a far field pressure at a multiplicity of observation points within said venue; and
g) generating an SPL map based on the obtained far field pressures.

**2.** A method according to claim 1, wherein said SPL map is generated for a specific defined frequency.

**3.** A method according to claim 1 or 2 and comprising selecting a subset of points from said multiplicity of observation points, repeating steps b) and d) to f) for a plurality of different frequencies to generate a frequency versus far field pressure data set for each of the subset of points.

**4.** A method according to any one of claims 1 to 3, wherein step b) comprises accessing a data library to obtain, for each loudspeaker unit type, a loudspeaker unit type data set, the method comprising constructing said data library by performing a computer implemented simulation on one or more loudspeaker unit types to determine acoustic velocity information at surface locations of the or each loudspeaker unit type, and saving results into the data library.

**5.** A method according to claim 4, wherein said simulation is conducted using a Lumped Element Model to obtain a lumped element circuit model of a loudspeaker driver and a Finite Element Mesh bidirectionally coupled to the lumped element circuit model, the simulation further comprising applying a Finite Element Method to the Finite Element Mesh and bidirectionally coupled lumped element circuit model.

**6.** A method according to claim 4 or 5, said data library being constructed on one or more first computers and distributed to one or more client computers configured to generate a Sound Pressure Level, SPL, map.

**7.** A method according to claim 1, wherein step b) comprises accessing a data library to obtain, for each loudspeaker unit type, a loudspeaker unit type data set, the method comprising constructing said data library by using an acoustic sensor to perform acoustic measurements on a loudspeaker unit of the or each type, and saving results into the data library.

**8.** A method according to any preceding claim, wherein the numerical method is a Boundary Element Method.

**9.** A method according to any preceding claim and comprising receiving said loudspeaker system configuration and, optionally, venue information, via a Graphical User Interface of a computer system.

**10.** A method according to any preceding claim, wherein the loudspeaker system configuration comprises at least one of a gain setting of each loudspeaker unit and a delay setting of each loudspeaker unit.

**11.** A method according to any preceding claim, wherein the loudspeakers units are bass loudspeaker units or subwoofers.

**12.** A method according to any preceding claim and comprising displaying the SPL map as a visual image on a display of a graphical user interface.

**13.** A computer program comprising instructions which, when the program is executed by a computer system, cause the computer system to carry out the steps of the method of any of the preceding claims wherein the computer system may optionally comprise an end user computer and a workstation or computer server.

**14.** A computer-readable storage medium comprising instructions which, when executed by a computer system, cause the computer system to carry out the steps of the method of any of claims 1 to 12.

**15.** A method of setting up a venue and comprising applying the method of any one of claims 1 to 12 to identify a loudspeaker system configuration that generates a desired SPL map across at least a public area of the venue, and installing a loudspeaker system having that configuration into the venue.

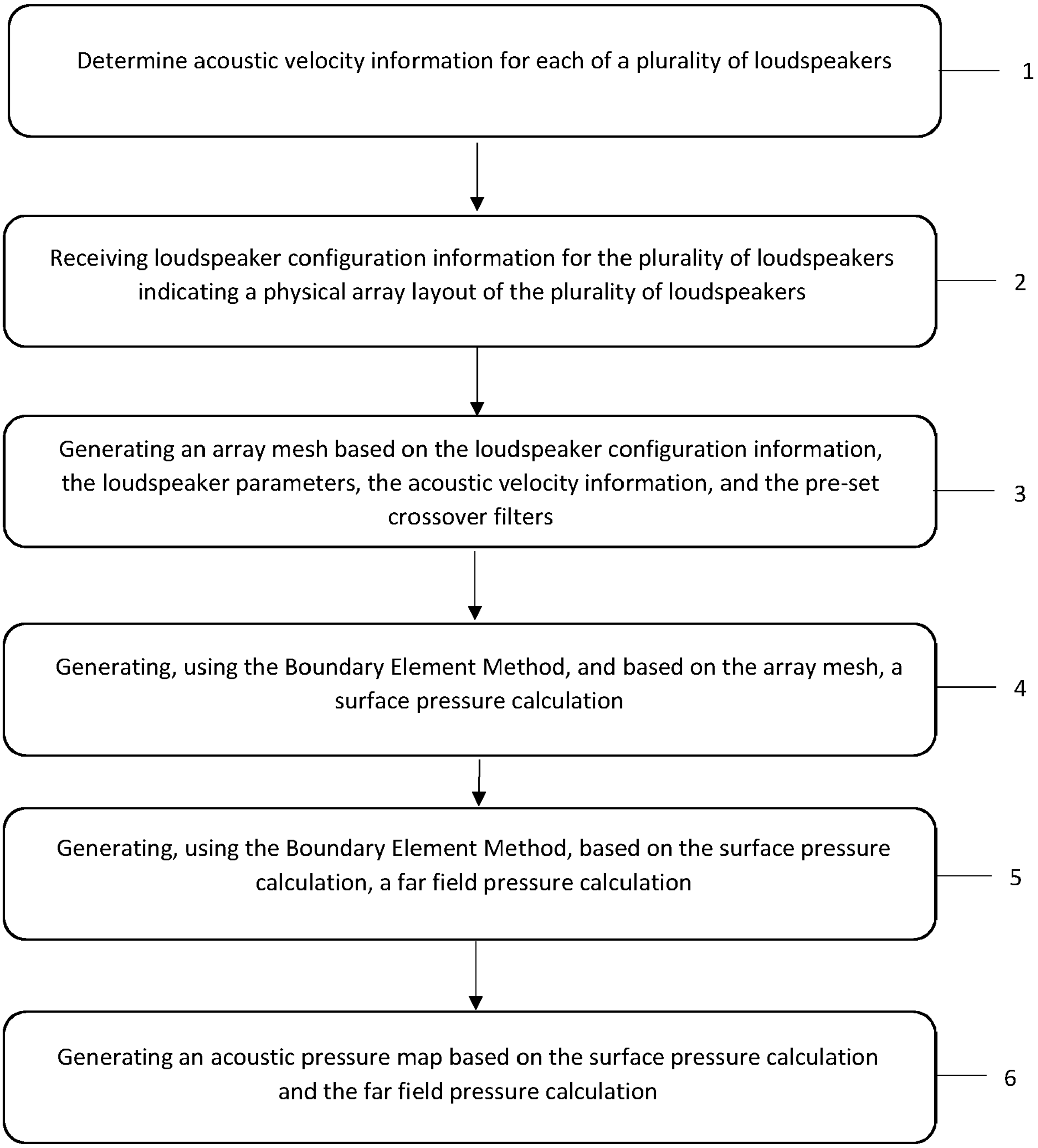
Determine acoustic velocity information for each of a plurality of loudspeakers
1
Receiving loudspeaker configuration information for the plurality of loudspeakers indicating a physical array layout of the plurality of loudspeakers
2
Generating an array mesh based on the loudspeaker configuration information, the loudspeaker parameters, the acoustic velocity information, and the pre-set crossover filters
3
Generating, using the Boundary Element Method, and based on the array mesh, a surface pressure calculation
4
Generating, using the Boundary Element Method, based on the surface pressure calculation, a far field pressure calculation
5
Generating an acoustic pressure map based on the surface pressure calculation and the far field pressure calculation
6

Figure 1

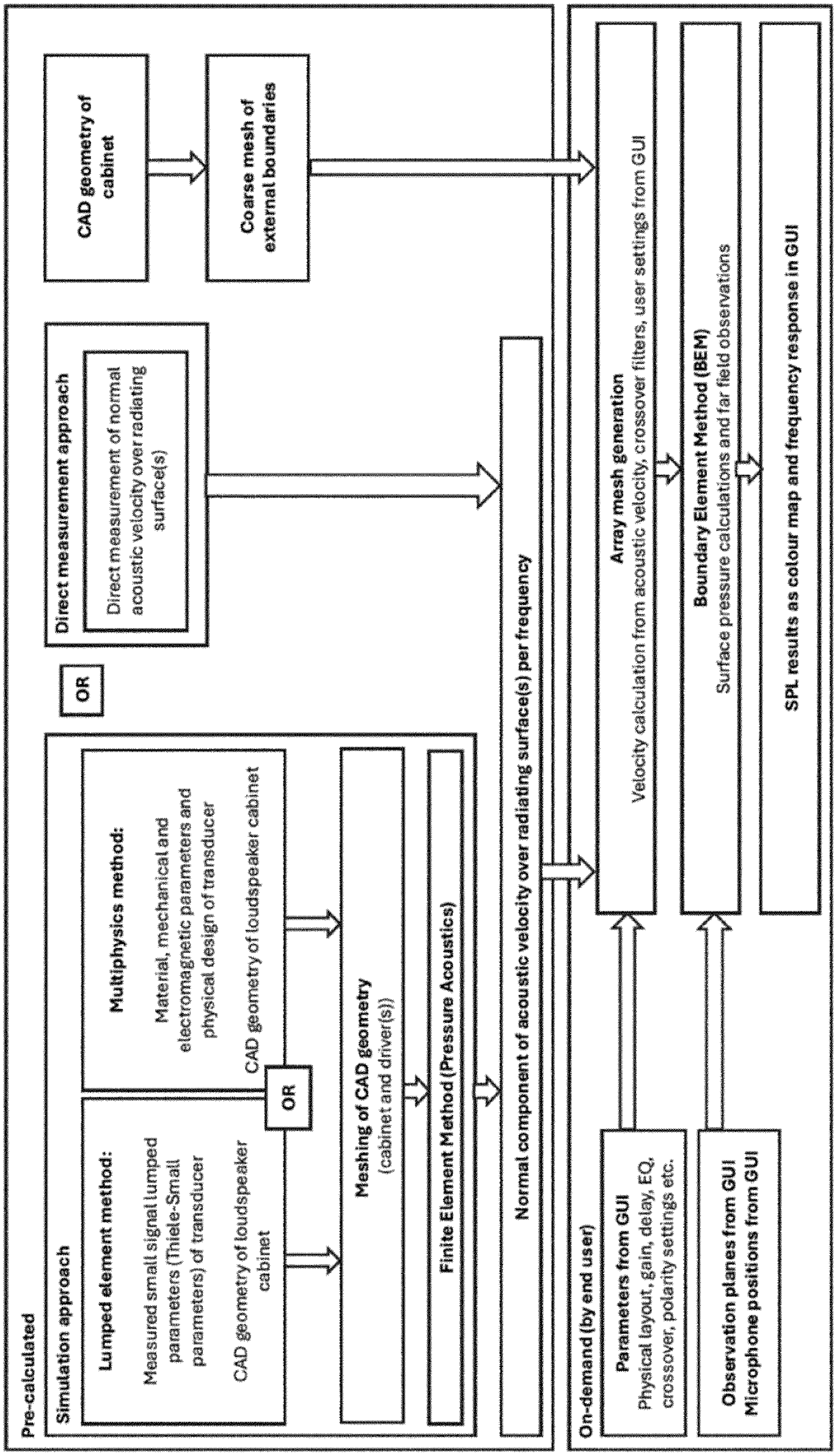
Pre-calculated
Simulation approach
Lumped element method:
Measured small signal lumped parameters (Thiele-Small parameters) of transducer
CAD geometry of loudspeaker cabinet
OR
Multiphysics method:
Material, mechanical and electromagnetic parameters and physical design of transducer
CAD geometry of loudspeaker cabinet
Meshing of CAD geometry
(cabinet and driver(s))
Finite Element Method (Pressure Acoustics)
OR
Direct measurement approach
Direct measurement of normal acoustic velocity over radiating surface(s)
CAD geometry of cabinet
Coarse mesh of external boundaries
Normal component of acoustic velocity over radiating surface(s) per frequency
On-demand (by end user)
Parameters from GUI
Physical layout, gain, delay, EQ, crossover, polarity settings etc.
Observation planes from GUI
Microphone positions from GUI
Array mesh generation
Velocity calculation from acoustic velocity, crossover filters, user settings from GUI
Boundary Element Method (BEM)
Surface pressure calculations and far field observations
SPL results as colour map and frequency response in GUI

Figure 2

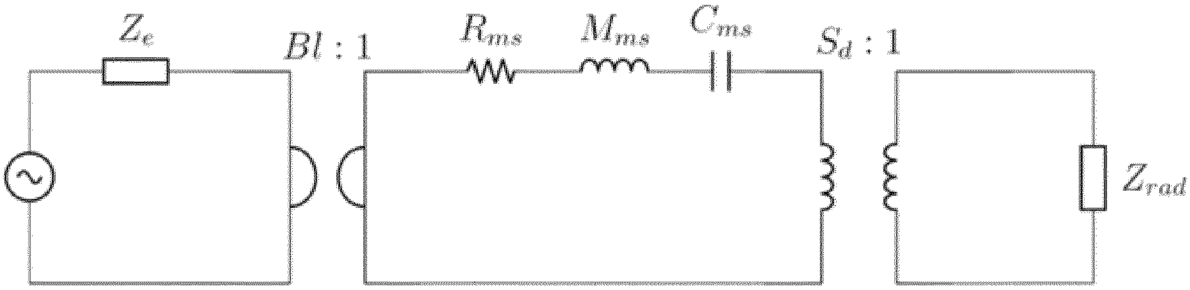


Figure 3

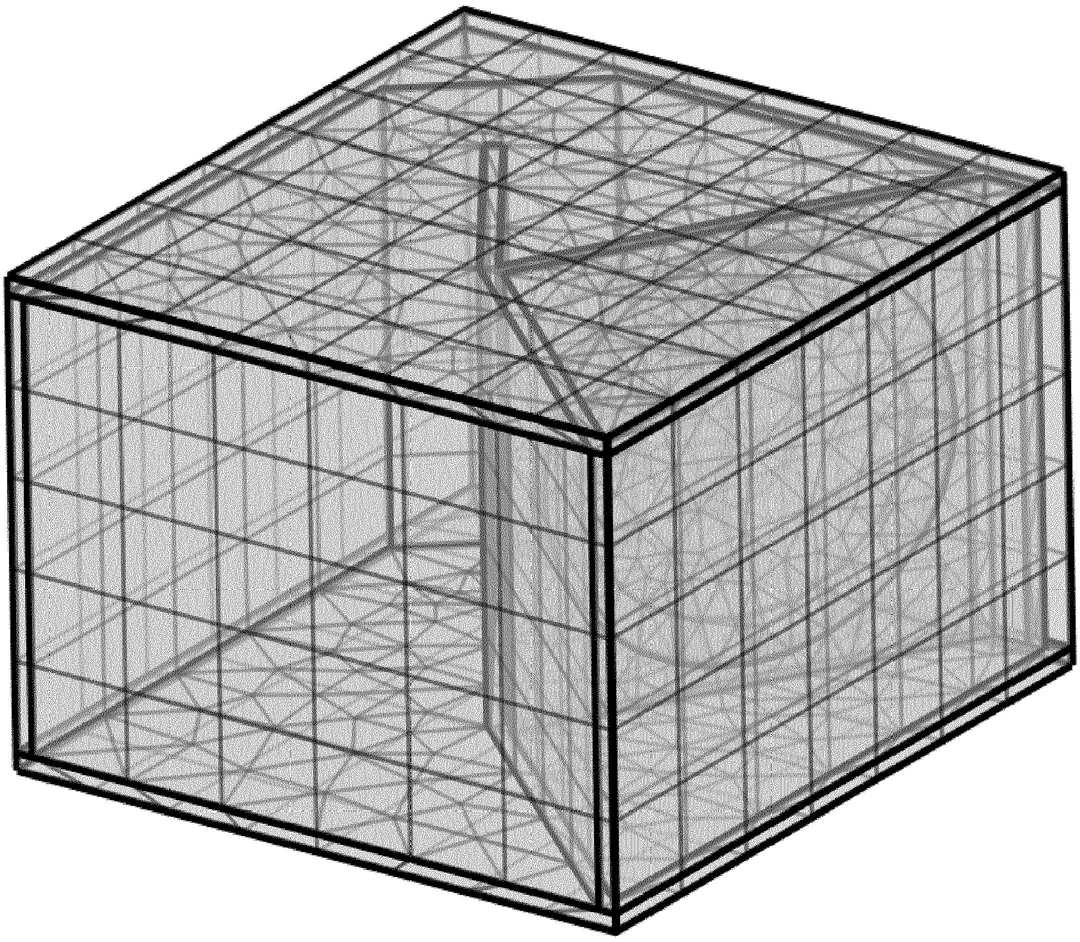

Figure 4

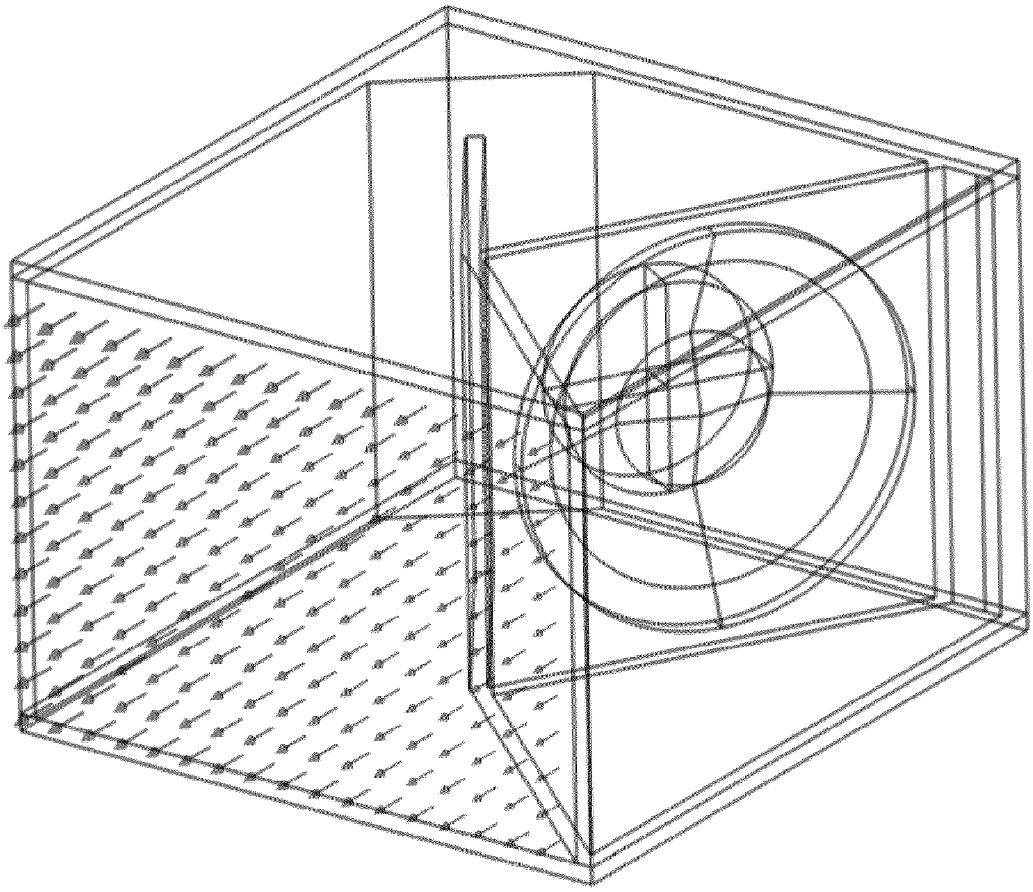

Figure 5

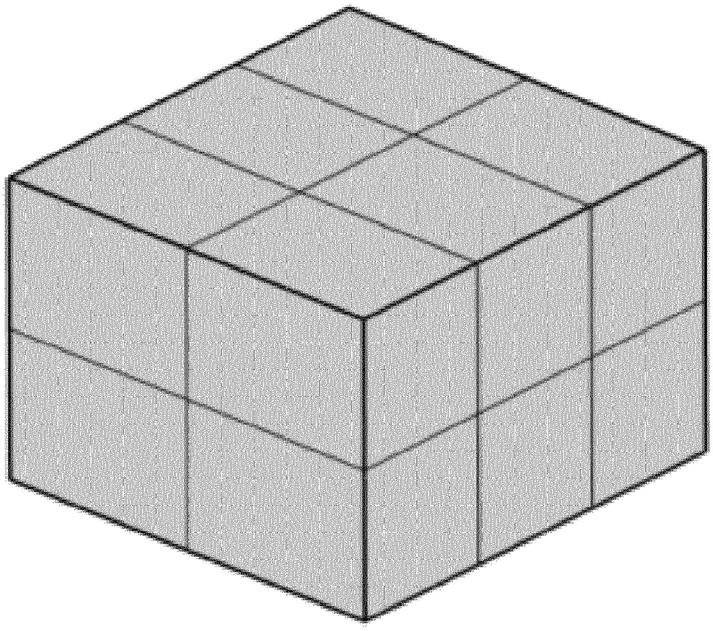

Figure 6

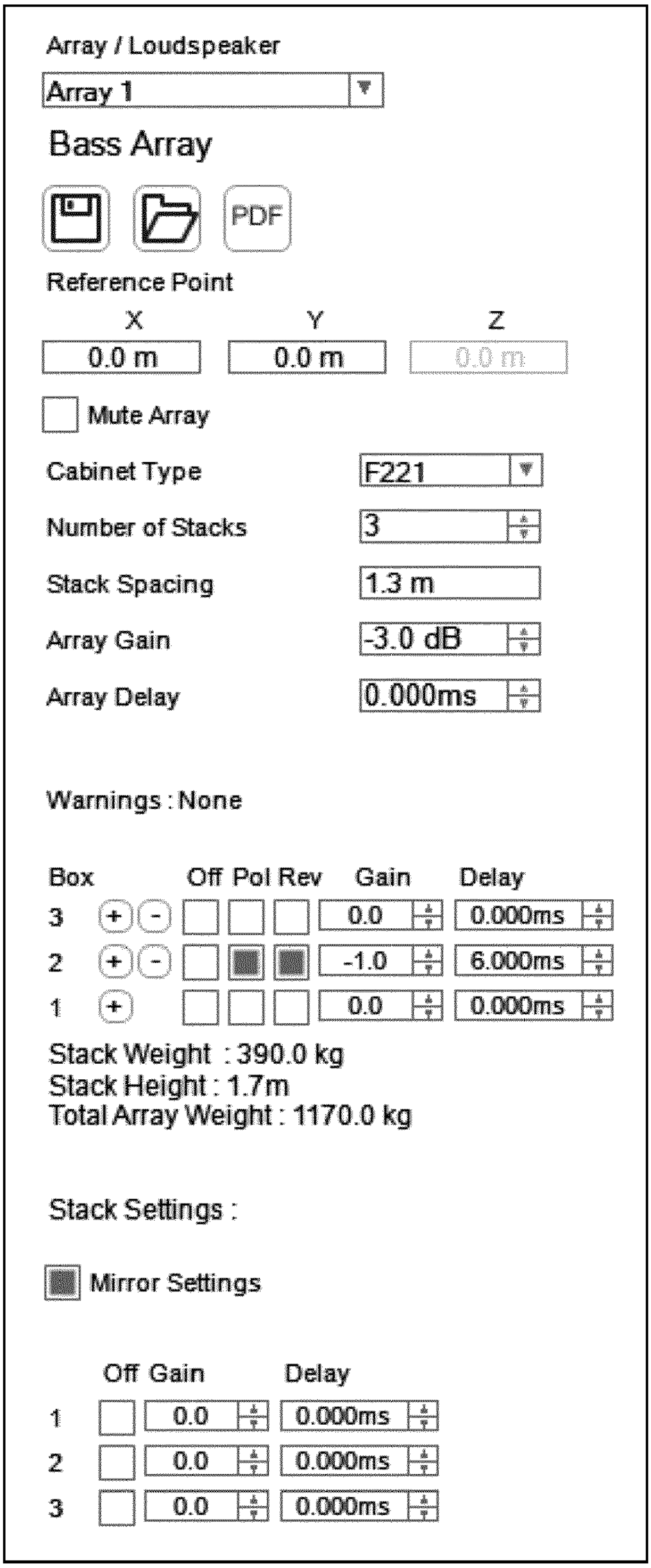
Array / Loudspeaker
Array 1
Bass Array
PDF
Reference Point
X
Y
Z
0.0 m
0.0 m
0.0 m
Mute Array
Cabinet Type
F221
Number of Stacks
3
Stack Spacing
1.3 m
Array Gain
-3.0 dB
Array Delay
0.000ms
Warnings : None
Box
Off Pol Rev
Gain
Delay
3
0.0
0.000ms
2
-1.0
6.000ms
1
0.0
0.000ms
Stack Weight : 390.0 kg
Stack Height : 1.7m
Total Array Weight : 1170.0 kg
Stack Settings :
Mirror Settings
Off Gain
Delay
1
0.0
0.000ms
2
0.0
0.000ms
3
0.0
0.000ms

Figure 7

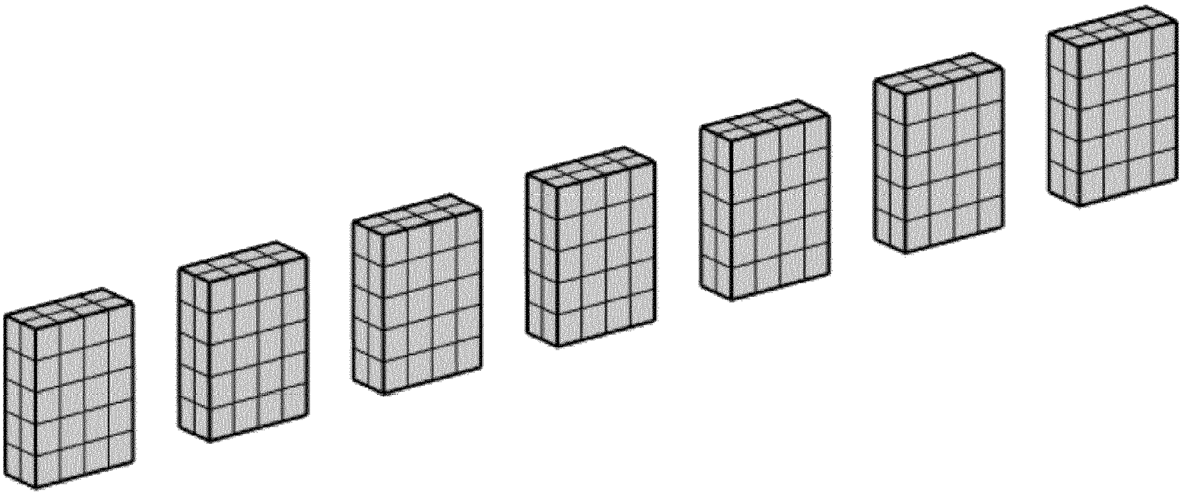

Figure 8

Europäisches Patentamt
European Patent Office
Office européen des brevets

# EUROPEAN SEARCH REPORT

Application Number
EP 24 19 2674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/179487 A1 (PIND FINNUR [IS] ET AL) 30 May 2024 (2024-05-30)<br>* paragraph [0163] - paragraph [0164] *<br>* paragraph [0192] *<br>* paragraph [0326] - paragraph [0342]; figure 1 *<br>----- | 1-15 | INV.<br>H04S7/00<br>H04R29/00<br>G06F30/23<br><br>ADD.<br>H04R1/40<br>H04R27/00 |
| A | KHRYSTOSLAVENKO OLGA ET AL: "SIMULATION OF ROOM ACOUSTICS USING COMSOL MULTIPHYSICS",<br>PROCEEDINGS OF THE 20TH CONFERENCE FOR JUNIOR RESEARCHERS "SCIENCE - FUTURE OF LITHUANIA",<br>20 March 2017 (2017-03-20), XP093055104,<br>DOI: 10.3846/aainz.2017.06<br>ISBN: 978-609-47-6072-3<br>* the whole document *<br>----- | 1-15 | |
| A | US 2010/232635 A1 (MIYAZAKI HIDEO [JP] ET AL) 16 September 2010 (2010-09-16)<br>* the whole document *<br>----- | 1-15 | TECHNICAL FIELDS SEARCHED (IPC)<br><br>H04S |

The present search report has been drawn up for all claims

1

| Place of search | Date of completion of the search | Examiner |
|---|---|---|
| Munich | 14 January 2025 | Guillaume, Mathieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 2674

This annex lists the patent family members relating to the patent documents cited in the above-mentioned European search report. The members are as contained in the European Patent Office EDP file on The European Patent Office is in no way liable for these particulars which are merely given for the purpose of information.

14-01-2025

| Patent document cited in search report | Publication date | Patent family member(s) | Publication date |
|---|---|---|---|
| US 2024179487 A1 | 30-05-2024 | US 2024177016 A1 | 30-05-2024 |
| | | US 2024179487 A1 | 30-05-2024 |
| | | WO 2024115515 A1 | 06-06-2024 |
| US 2010232635 A1 | 16-09-2010 | EP 1746522 A2 | 24-01-2007 |
| | | US 2007019823 A1 | 25-01-2007 |
| | | US 2010232610 A1 | 16-09-2010 |
| | | US 2010232611 A1 | 16-09-2010 |
| | | US 2010232635 A1 | 16-09-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2090137 B1